# EUROPÄISCHE PATENTSCHRIFT

(11) **EP 3 610 147 B1**
(45) Veröffentlichungstag und Bekanntmachung des Hinweises auf die Patenterteilung: **05.05.2021**
(21) Anmeldenummer: 18716198.9
(22) Anmeldetag: 03.04.2018
(51) Int. Cl.: F02D 41/00, F02D 41/30, F02D 13/02, F02D 13/06, F02D 17/02

(54) **VERFAHREN ZUM BETREIBEN EINER BRENNKRAFTMASCHINE UND BRENNKRAFTMASCHINE**
METHOD FOR OPERATING AN INTERNAL COMBUSTION ENGINE, AND INTERNAL COMBUSTION ENGINE
PROCÉDÉ POUR FAIRE FONCTIONNER UN MOTEUR À COMBUSTION INTERNE ET MOTEUR À COMBUSTION INTERNE

(30) Priorität: 12.04.2017 DE 102017206266
(43) Veröffentlichungstag der Anmeldung: 19.02.2020
(73) Patentinhaber: Volkswagen Aktiengesellschaft, 38440 Wolfsburg (DE)
(72) Erfinder: GESSENHARDT, Christopher, 39356 Weferlingen (DE)
(86) Internationale Anmeldenummer: PCT/EP2018/058412
(87) Internationale Veröffentlichungsnummer: WO 2018/188984

(56) Entgegenhaltungen:
- WO-A1-2017/005445
- DE-T5-112015 000 165
- FR-A1- 3 014 489
- US-A1- 2015 322 869
- RUDOLF FLIERL ET AL: "Mechanisch Vollvariabler Ventiltrieb und Zylinderabschaltung", MTZ - MOTORTECHNISCHE ZEITSCHRIFT, SPRINGER, Bd. 74, Nr. 4, 1. April 2013 (2013-04-01), Seiten 334-341, XP001582743, ISSN: 0024-8525, DOI: 10.1007/S35146-013-0082-X

## Beschreibung

Die Erfindung betrifft ein Verfahren zum Betreiben einer Brennkraftmaschine mit einem Hubkolben-Verbrennungsmotor, der in einem Teilbetrieb betrieben werden kann.

Es sind mehrzylindrige Hubkolben-Brennkraftmaschinen bekannt, die temporär in einem sogenannten Teilbetrieb betrieben werden können, in dem ein Teil der Brennräume deaktiviert sind, so dass in diesen keine thermodynamischen Kreisprozesse durchgeführt werden. Vielmehr werden die den deaktivierten Brennräumen zugeordneten Kolben von den Kolben der weiterhin aktiven Brennräume mitgeschleppt. Dies erfolgt mit dem Ziel einer Wirkungsgraderhöhung für den Betrieb der Brennkraftmaschinen, weil eine Deaktivierung eines Teils der Brennräume bei im Wesentlichen gleichbleibender Antriebsleistung zu einem Betrieb der verbliebenen aktiven Brennräume mit deutlich höherer Last führt, was mit einem höheren spezifischen Wirkungsgrad der in diesen Brennräumen durchgeführten thermodynamischen Kreisprozesse einhergeht. Um die für die aktiven Brennräume erreichbare Wirkungsgradsteigerung nur möglichst wenig durch das Mitschleppen der Kolben der deaktivierten Brennräume zu verringern ist in der Regel vorgesehen, die den deaktivierten Brennräumen zugeordneten Gaswechselventile im Teilbetrieb geschlossen zu halten, wodurch das innerhalb dieser Brennräume angeordnete Gas zyklisch komprimiert und expandiert, jedoch nicht ausgestoßen wird. Eine Verlustleistung infolge einer Komprimierung von Gasmengen, die anschließend durch geöffnete Auslassventile ausgestoßen würden, kann auf diese Weise vermieden werden.

Zur Erzielung eines möglichst großen Antriebskomforts für ein von einer solchen Brennkraftmaschine angetriebenes Kraftfahrzeug sollte ein Umschalten zwischen den Betriebsarten (Vollbetrieb und Teilbetrieb) möglichst momentenneutral und dadurch ohne Antriebsruckeln realisiert werden. Hierzu ist es erforderlich, die bei der Umschaltung abnehmende Last, mit der die zu deaktivierenden Brennräume betrieben werden, in möglichst optimal abgestimmter Weise durch eine zunehmende Belastung, mit der die weiterhin aktiv zu betreibenden Brennräume betrieben werden, zu kompensieren.

Aus der DE 10 2011 086 344 A1 ist eine Brennkraftmaschine mit einem zwei Zylinderbänke aufweisenden Verbrennungsmotor bekannt, bei dem für einen Teilbetrieb die Brennräume einer der Zylinderbänke deaktiviert werden können. Dabei ist vorgesehen, diese Brennräume nacheinander zu deaktivieren, um ein möglichst momentenneutrales Umschalten von einem Vollbetrieb, bei dem beide Zylinderbänke im aktivierten Zustand sind, zu dem Teilbetrieb zu erreichen.

Auch die DE 10 2012 017 275 A1 beschreibt eine Hubkolben-Brennkraftmaschine mit mehreren Zylindern, von denen einzelne im Rahmen eines Teilbetriebs deaktiviert werden können. Um eine möglichst momentenneutrale Umschaltung von einem Vollbetrieb auf einen Teilbetrieb zu realisieren ist vorgesehen, für die Umschaltung während einer über mehrere Takte ablaufenden Drosselung der zu deaktivierenden Brennräume einen schaltbaren, insbesondere elektromotorisch angetriebenen Verdichter kurzzeitig zu aktivieren, um die Füllung der weiter aktiv zu betreibenden Brennräume zu erhöhen.

Die DE 10 2012 004 419 A1 offenbart einen Ventiltrieb für einen Verbrennungsmotor eines Kraftfahrzeugs, wobei der Verbrennungsmotor sowohl im Voll- als auch Teilbetrieb betreibbar ist. Zum Umschalten vom Vollbetrieb in den Teilbetrieb ist vorgesehen, für die den abzuschaltenden Brennräumen zugeordneten Einlassventile von einer Betätigung mittels eines ersten Nockens zu einer (Nicht-)Betätigung mittels eines Nullnockens umzuschalten, während für die den weiter zu betreibenden Brennräumen zugeordneten Einlassventile von einer Betätigung mittels eines ersten Nockens zu einer Betätigung mittels eines zweiten Nockens umgeschaltet wird. Dabei unterscheiden sich diese beiden Nocken hinsichtlich des durch diese bewirkten Ventilhubs.

Aus der bislang unveröffentlichten deutschen Patentanmeldung 10 2016 209 957.4 ist ein Verfahren zum Betreiben einer Brennkraftmaschine mit einem Verbrennungsmotor, der mindestens zwei Brennräume ausbildet, die von in einem Zylindergehäuse ausgebildeten Zylindern und darin zyklisch auf und ab geführten Kolben begrenzt werden und in denen im Betrieb der Brennkraftmaschine thermodynamische Kreisprozesse durchführbar sind, wobei dann ein Gaswechsel in den Brennräumen mittels jeweils mindestens eines Einlassventils und jeweils mindestens eines Auslassventils, die mittels Nocken betätigt werden, gesteuert wird und wobei
- ein erster Betriebszustand (Vollbetrieb) vorgesehen ist, in dem sowohl in einem ersten Brennraum als auch in einem zweiten Brennraum die thermodynamischen Kreisprozesse durchgeführt werden und
- ein zweiter Betriebszustand (Teilbetrieb) vorgesehen ist, in dem in dem ersten Brennraum die thermodynamischen Kreisprozesse durchgeführt werden und in dem zweiten Brennraum die thermodynamischen Kreisprozesse nicht durchgeführt werden,
wobei für ein Umschalten von dem ersten Betriebszustand in den zweiten Betriebszustand von einer Verwendung eines ersten Einlassnockens zu der Verwendung eines zweiten Einlassnockens für die Betätigung des dem ersten Brennraum zugeordneten Einlassventils gewechselt wird. Weiterhin wird zumindest das dem ersten Brennraum zugeordnete Einlassventil bei einer Betätigung mittels des ersten Einlassnockens vor UT (insbesondere vor UT - 60°KW zur Erzielung eines Miller-Vollbetriebs) oder nach UT (insbesondere nach UT + 100°KW zur Erzielung eines relevanten Atkinson-Vollbetriebs) und mittels des zweiten Einlassnockens näher an UT geschlossen.

Der Wechsel zwischen den Einlassnocken, durch die das dem ersten Brennraum zugeordnete Einlassventil alternativ aufgrund eines Umschaltens zwischen den Betriebsarten betätigt wird, erfolgt mit dem Ziel einer temporären Erhöhung des Liefergrads, d.h. des Verhältnisses der nach Abschluss eines Ladungswechsels tatsächlich im Brennraum enthaltenen Masse an Frischgas zu der theoretisch maximal möglichen Masse, um ein möglichst momentenneutrales Umschalten von einem Vollbetrieb auf einen Teilbetrieb zu realisieren, ohne dabei durch erhebliche Änderungen des Zündwinkels eine Verschlechterung des Wirkungsgrads in Kauf nehmen zu müssen.

Bei dem Verfahren gemäß der 10 2016 209 957.4 kann weiterhin vorgesehen sein, dass nach dem Umschalten von dem ersten Betriebszustand in den zweiten Betriebszustand die Steuerzeiten für das dem ersten Brennraum zugeordnete Einlassventil
- in Richtung früh verstellt werden, wenn für den ersten Betriebszustand ein Einlassschließen vor UT vorgesehen war oder
- in Richtung spät verstellt werden, wenn für den ersten Betriebszustand ein Einlassschließen nach UT vorgesehen war.

Zusammenfassend kann bei dem Verfahren gemäß der 10 2016 209 957.4 demnach vorgesehen sein, dass der Verbrennungsmotor zunächst in einem hinsichtlich des Wirkungsgrads vorteilhaften Miller-Vollbetrieb oder Atkinson-Vollbetrieb genutzt wird. Ausgehend von einem solchen Vollbetrieb wird in einen Teilbetrieb umgeschaltet, wobei zur Erzielung einer einerseits möglichst momentenneutralen und andererseits hinsichtlich des Wirkungsgrads optimalen Umschaltung zu einer Betätigung der den weiterhin zu betreibenden Brennräumen zugeordneten Einlassventile mittels eines zweiten Einlassnockens umgeschaltet wird, wobei die durch diesen zweiten Einlassnocken bewirkte Schließzeit des Einlassventils hinsichtlich eines maximalen Liefergrads ausgelegt ist. Da eine solche Schließzeit des Einlassventils mit einer erhöhten Klopfgefahr einhergeht, ist vorgesehen, kurzfristig nach dem Umschalten auf den zweiten Einlassnocken und vorzugsweise gleichzeitig mit einer Erhöhung des Drucks in einem Saugrohr des Verbrennungsmotors die Steuerzeiten des Einlassventils mittels eines Phasenstellers entweder wieder in Richtung früh (zur Erzielung eines Miller-Teilbetriebs) zu verstellen, wenn zuvor auch ein Miller-Vollbetrieb vorgesehen war, oder wieder in Richtung spät (zur Erzielung eines Atkinson-Teilbetriebs) zu verstellen, wenn zuvor auch ein Atkinson-Vollbetrieb vorgesehen war.

Dieses Vorgehen führt zu der Problematik, dass, basierend auf dem relativ eingeschränkten Verstellbereich konventioneller Phasensteller, für den dem Umschalten unmittelbar vorausgehenden Miller- oder Atkinson-Vollbetrieb nicht die durch den Phasensteller grundsätzlich ermöglichten frühesten Schließzeiten (beim Miller-Vollbetrieb) oder spätesten Schließzeiten (beim Atkinson-Vollbetrieb) genutzt werden können, da ein definierter Verstellbereich für den nach dem Umschalten vorgesehenen Teilbetrieb gemäß demselben Betriebsverfahren (Miller oder Atkinson), der zuvor auch im Vollbetrieb vorgesehen war, vorgehalten werden muss. Werden jedoch vor dem Umschalten nicht die durch den Phasensteller ermöglichten frühesten Schließzeiten (beim Miller-Vollbetrieb) oder spätesten Schließzeiten (beim Atkinson-Vollbetrieb) ausgenutzt, verringert sich der durch das Wechseln auf den zweiten Einlassnocken hinsichtlich des Wirkungsgrads während des Umschaltens zwischen den Betriebsarten mittels der Erhöhung des Liefergrads erzielbare Vorteil, was folglich mit einem verringerten Wirkungsgrad im Betrieb des Verbrennungsmotors während des Umschaltens einhergeht

Bei dem Verfahren gemäß der WO 2017/005445 A wird während der Umschaltung der Brennkraftmaschine zwischen einem Voll-Zylinderbetrieb und einem Teil-Zylinderbetrieb a) in einer frühen Umschaltphase an allen Zylindern der Ventilhub vergrößert und gleichzeitig der Zeitpunkt des maximalen Ventilhubs mittels Phasensteller nach früh verstellt wird und/oder b) in einer späten Umschaltphase zumindest an den Zylindern, die nach der Umschaltung weiterlaufen sollen, der Ventilhub verkleinert und gleichzeitig der Zeitpunkt des maximalen Ventilhubs nach spät verstellt.

Der Erfindung lag die Aufgabe zugrunde, bei einer Brennkraftmaschine auf möglichst einfache Weise ein möglichst momentenneutrales Umschalten von einem Vollbetrieb auf einen Teilbetrieb bei gleichzeitig möglichst großem Wirkungsgrad im Betrieb der Brennkraftmaschine zu realisieren.

Diese Aufgabe wird mittels eines Verfahrens gemäß dem Patentanspruch 1 gelöst. Eine zur Durchführung eines solchen Verfahrens geeignete Brennkraftmaschine ist Gegenstand des Patentanspruchs 12. Vorteilhafte Ausführungsformen des erfindungsgemäßen Verfahrens und bevorzugte Ausgestaltungsformen der erfindungsgemäßen Brennkraftmaschine sind Gegenstände der weiteren Patentansprüche und/oder ergeben sich aus der nachfolgenden Beschreibung der Erfindung.

Der Erfindung liegt, ebenso wie dem Verfahren gemäß der 10 2016 209 957.4, der Gedanke zugrunde, ein möglichst momentenneutrales Umschalten von einem Vollbetrieb in einen Teilbetrieb einer Brennkraftmaschine mit einem mehrzylindrigen Verbrennungsmotor zu realisieren, indem der durch die Deaktivierung des oder der hierfür vorgesehenen Zylinder wegfallende Drehmomentanteil durch den oder die weiterhin aktiv zu betreibenden Brennräume zumindest auch dadurch kompensiert wird, dass bei der Umschaltung der Liefergrad, d.h. das Verhältnis der nach Abschluss eines Ladungswechsels tatsächlich im Brennräume enthaltenen Masse an Frischgas zu der theoretisch maximal möglichen Masse, für diese Brennräume erhöht und insbesondere so weit wie möglich maximal eingestellt wird. Dadurch kann unabhängig von einer Saugrohrdruckerhöhung die Menge des in den Brennräumen der weiterhin aktiv betriebenen Brennräume umsetzbaren Kraftstoffs und damit das von diesen erzeugte Antriebsmoment erhöht werden. Besonders vorteilhaft an einer Erhöhung des Liefergrads ist, dass dies, insbesondere im Vergleich zu einer Erhöhung des Saugrohrdrucks (insbesondere bei der Verwendung eines relativ kostengünstigen Abgasturboladers) vergleichsweise schnell realisierbar ist, indem die Steuerzeiten der Einlassventile der weiterhin aktiv zu betreibenden Brennräume verstellt werden. Eine besonders schnelle Verstellung der Steuerzeiten kann dabei durch einen Wechsel der diese Einlassventile betätigenden Nocken mittels einer entsprechenden Umschaltvorrichtung, wie sie insbesondere auch für die Deaktivierung der Gaswechselventile der zu deaktivierenden Brennräume vorgesehen sein kann, erfolgen.

Dementsprechend ist ein Verfahren zum Betreiben einer Brennkraftmaschine vorgesehen, wobei die Brennkraftmaschine zumindest einen Verbrennungsmotor, vorzugsweise einen fremdgezündeten Verbrennungsmotor, insbesondere einen Ottomotor, umfasst, der mindestens zwei Brennräume ausbildet, die von in einem Zylindergehäuse ausgebildeten Zylindern und darin geführten Kolben begrenzt werden und in denen im Betrieb der Brennkraftmaschine thermodynamische Kreisprozesse durchführbar sind, wobei dann ein Gaswechsel in den Brennräumen mittels jeweils mindestens eines Einlassventils und jeweils mindestens eines Auslassventils, die vorzugsweise mittels Nocken betätigt werden, gesteuert wird und wobei
- ein erster Betriebszustand vorgesehen ist, in dem sowohl in einem ersten der Brennräume als auch in einem zweiten der Brennräume die thermodynamischen Kreisprozesse durchgeführt werden (Vollbetrieb) und
- ein zweiter Betriebszustand vorgesehen ist, in dem in dem ersten Brennraum die thermodynamischen Kreisprozesse durchgeführt werden und in dem zweiten Brennraum die thermodynamischen Kreisprozesse nicht durchgeführt werden (Teilbetrieb), indem zumindest eine Zufuhr von Kraftstoff in den zweiten Brennraum unterbunden und/oder eine Zündung von Kraftstoff verhindert wird und zudem vorzugsweise die dem zweiten Brennraum zugeordneten Einlass- und Auslassventile nicht betätigt und somit geschlossen gehalten werden.

Dabei ist vorgesehen, dass für ein Umschalten von dem ersten Betriebszustand in den zweiten Betriebszustand von einer Verwendung einer ersten Ventilerhebungskurve, die vorzugsweise mittels eines ersten Einlassnockens aufgebracht wird, zu der Verwendung einer zweiten Ventilerhebungskurve, die vorzugsweise mittels eines zweiten Einlassnockens aufgebracht wird, für die Betätigung des dem ersten Brennraum zugeordneten Einlassventils gewechselt wird.

Um in vorteilhafter Weise durch einen Wechsel der Ventilerhebungskurven für das dem auch in dem zweiten Betriebszustand aktiv genutzten ersten Brennraum zugeordnete Einlassventil eine Erhöhung des Liefergrads realisieren zu können, ist weiterhin vorgesehen, dass der Liefergrad für diesen Brennraum (und vorzugsweise auch für den zweiten Brennraum) im ersten Betriebszustand nicht größtmöglich ist, indem für das/die diesem oder diesen Brennräumen zugeordnete Einlassventil(e) ein relativ frühes (d.h. deutlich vor UT liegendes) oder ein relativ spätes (d.h. deutlich nach UT liegendes) Einlassschließen vorgesehen wird (UT: Unterer Totpunkt der Kolbenbewegung). Ein solches Vorgehen kann bei modernen Brennkraftmaschinen regelmäßig vorgesehen sein und ist als Miller- Verfahren (bei relativ frühem Einlassschließen) oder Atkinson-Verfahren (bei relativ spätem Einlassschließen) bekannt. Dieses Vorgehen ermöglicht bei einem Betrieb einer Brennkraftmaschine mit geringen bis mittleren Lasten die Realisierung eines relativ hohen Wirkungsgrads infolge einer vergleichsweise stark ausgeprägten Entspannung der relativ geringen Menge des in den Brennräumen eingeschlossenen Gases während des Arbeitstakts. Vorgesehen ist daher, dass zumindest das dem ersten Brennraum zugeordnete Einlassventil bei einer Betätigung mittels der ersten Ventilerhebungskurve vor UT, vorzugsweise vor UT - 60°KW, oder nach UT, vorzugsweise nach UT + 100°KW, geschlossen wird. Da ein Umschalten vom Vollbetrieb in den Teilbetrieb der Brennkraftmaschine häufig nur dann sinnvoll möglich ist, wenn die Brennkraftmaschine zuvor (im Vollbetrieb) im Wesentlichen stationär mit geringen bis mittleren Lasten betrieben worden ist, ist es zur Erzielung eines in diesem (Voll-)Betrieb möglichst guten Wirkungsgrads grundsätzlich auch sinnvoll, diesen entsprechend eines Miller- oder Atkinson-Verfahrens zu betreiben. Nach einem Umschalten in den Teilbetrieb soll dagegen erfindungsgemäß der Liefergrad in dem weiterhin aktiv betriebenen ersten Brennraum im Vergleich zu dem Vollbetrieb erhöht sein, um den Wegfall der Antriebsleistung des zweiten Brennraums zumindest teilweise zu kompensieren. Insbesondere kann dafür vorgesehen sein, einen möglichst großen Liefergrad zu realisieren, wobei gegebenenfalls Beschränkungen, wie beispielsweise eine Vermeidung von Klopfen, berücksichtigt werden sollten. Hierzu ist im Rahmen des erfindungsgemäßen Verfahrens vorgesehen, dass zumindest das dem ersten Brennraum zugeordnete Einlassventil im Teilbetrieb der Brennkraftmaschine und demnach bei einer Betätigung gemäß der zweiten Ventilerhebungskurve (zumindest zunächst) mit Schließzeiten, die im Vergleich zu dem vorausgegangenen Vollbetrieb näher an UT liegen, geschlossen wird. Insbesondere kann vorgesehen sein, dass dem ersten Brennraum zugeordnete Einlassventil dann in dem Bereich zwischen UT ± 45°KW, vorzugsweise UT ± 40°KW und besonders bevorzugt zwischen UT ± 30°KW geschlossen wird.

Um zu vermeiden, dass sich das durch das Umschalten zwischen den beiden (unterschiedlichen) Ventilerhebungskurven bewirkte Verschieben des Schließzeitpunkts für das Einlassventil im gleichen Maße auf den Öffnungszeitpunkts für das dem ersten Brennraum zugeordnete Einlassventil auswirkt, kann vorzugsweise vorgesehen sein, dass die Breite der zweiten Ventilerhebungskurve im Vergleich zu der Breite der ersten Ventilerhebungskurve
- größer ist, wenn für den ersten Betriebszustand ein Einlassschließen vor UT vorgesehen war oder
- kleiner ist, wenn für den ersten Betriebszustand ein Einlassschließen nach UT vorgesehen war.
Dadurch kann eine ungewollte Verschiebung des Öffnungszeitpunkts für das dem ersten Brennraum zugeordnete Einlassventil vermieden werden. Insbesondere kann vorgesehen sein, dass der gemäß der zweiten Ventilerhebungskurve bewirkte Öffnungszeitpunkt für dieses Einlassventil möglichst exakt oder im Wesentlichen dem durch die erste Ventilerhebungskurve bewirkten Öffnungszeitpunkt entspricht (z.B. Differenz von maximal ±10°KW).

Die erfindungsgemäß für ein möglichst momentenneutrales und gleichzeitig hinsichtlich des Wirkungsgrads optimales Umschalten vom Vollbetrieb in den Teilbetrieb vorgesehene Maximierung des Liefergrads für den ersten Brennraum kann mit einer stark erhöhten Klopfneigung für diesen Brennraum einhergehen, was grundsätzlich unerwünscht ist, weil dies ein Klopfen verhindernde Gegenmaßnahmen erfordert, die sich in der Regel negativ auf den Wirkungsgrad auswirken. Für einen sich an das Umschalten anschließenden, länger andauernden Teilbetrieb ist daher erfindungsgemäß vorgesehen, dass nach dem Umschalten von dem ersten Betriebszustand in den zweiten Betriebszustand die Steuerzeiten für das dem ersten Brennraum zugeordnete Einlassventil mittels eines Phasenstellers,
- (weiter) in Richtung spät (vorzugsweise bis zumindest UT + 25°KW und weiterhin bevorzugt bis ca. oder maximal UT + 55°KW) verstellt werden, wenn für den ersten Betriebszustand ein Einlassschließen vor UT (Miller-Betriebsverfahren) vorgesehen war oder
- (weiter) in Richtung früh (vorzugsweise bis zumindest UT - 20°KW und weiterhin bevorzugt bis ca. oder maximal UT - 55°KW) verstellt werden, wenn für den ersten Betriebszustand ein Einlassschließen nach UT (Atkinson-Betriebsverfahren) vorgesehen war.

Zusammenfassend ist bei einem erfindungsgemäßen Verfahren vorgesehen, dass der Verbrennungsmotor zunächst in einem hinsichtlich des Wirkungsgrads vorteilhaften Miller-Vollbetrieb oder Atkinson-Vollbetrieb genutzt wird. Ausgehend von einem solchen Vollbetrieb wird in einen Teilbetrieb umgeschaltet, wobei zur Erzielung einer einerseits möglichst momentenneutralen und andererseits hinsichtlich des Wirkungsgrads möglichst optimalen Umschaltung zu einer Betätigung der den weiterhin zu betreibenden Brennräumen zugeordneten Einlassventile gemäß einer zweiten Ventilerhebungskurve umgeschaltet wird, wobei die durch diese zweite Ventilerhebungskurve bewirkte Schließzeit des Einlassventils hinsichtlich eines (soweit sinnvoll) maximalen Liefergrads ausgelegt ist. Da eine solche Schließzeit des Einlassventils mit einer erhöhten Klopfgefahr einhergeht ist vorgesehen, kurzfristig oder unmittelbar nach dem Umschalten auf den zweiten Einlassnocken und vorzugsweise gleichzeitig mit einer Erhöhung des Drucks in einem Saugrohr des Verbrennungsmotors die Steuerzeiten des Einlassventils mittels des Phasenstellers entweder weiter in Richtung spät (zur Erzielung eines Atkinson-Teilbetriebs) zu verstellen, wenn zuvor ein Miller-Vollbetrieb vorgesehen war, oder weiter in Richtung früh (zur Erzielung eines Miller-Teilbetriebs) zu verstellen, wenn zuvor auch ein Atkinson-Vollbetrieb vorgesehen war.

Dadurch kann erreicht werden, dass für den dem Umschalten unmittelbar vorausgehenden Miller- oder Atkinson-Vollbetrieb die durch den Phasensteller grundsätzlich ermöglichten frühesten Schließzeiten (beim Miller-Vollbetrieb) oder spätesten Schließzeiten (beim Atkinson-Vollbetrieb) genutzt werden können, da für den erfindungsgemäß vorgesehenen Wechsel der Betriebsverfahren (Miller-Vollbetrieb zu Atkinson-Teilbetrieb oder Atkinson-Vollbetrieb zu Miller-Teilbetrieb) über einem Umschalten vom Voll- zum Teilbetrieb der Phasensteller ausgehend von einer seiner Endstellungen in Richtung der jeweiligen anderen Endstellung verstellt werden kann, wofür dann der gesamte Verstellbereich des Phasenstellers zur Verfügung stehen kann. Dadurch können die durch den Phasensteller ermöglichten frühesten Schließzeiten (beim Miller-Vollbetrieb) oder spätesten Schließzeiten (beim Atkinson-Vollbetrieb) ausgenutzt werden, so dass gleichzeitig der durch das Wechseln auf die zweite Ventilerhebungskurve hinsichtlich des Wirkungsgrads während des Umschaltens zwischen den Betriebsarten mittels der Erhöhung des Liefergrads erzielbare Vorteil maximiert werden kann, was folglich mit einem möglichst optimalen Wirkungsgrad im Betrieb des Verbrennungsmotors während des Umschaltens einhergehen kann, da eine sich negativ auf den Wirkungsgrad auswirkende Spätverstellung des Zündzeitpunkts vor dem Umschalten vom Voll- in den Teilbetrieb mit dem Ziel einer Drehmomentanpassung relativ gering gehalten oder sogar vollständig vermieden werden kann.

Eine erfindungsgemäße Brennkraftmaschine, die zumindest einen Verbrennungsmotor umfasst, der mindestens zwei Brennräume ausbildet, die von in einem Zylindergehäuse ausgebildeten Zylindern und darin geführten Kolben begrenzt werden und in denen im Betrieb der Brennkraftmaschine thermodynamische Kreisprozesse durchführbar sind, wobei ein Gaswechsel in den Brennräumen mittels jeweils eines Einlassventils und eines Auslassventils, die vorzugsweise mittels Nocken betätigt werden, steuerbar ist und wobei für das einem ersten Brennraum zugeordnete Einlassventil sowohl zwei (unterschiedliche) Ventilerhebungskurven (die vorzugsweise mittels Einlassnocken aufgebracht werden), zwischen deren Nutzung mittels einer Umschaltvorrichtung umgeschaltet werden kann, als auch ein Phasensteller vorgesehen sind, ist durch eine Steuerungsvorrichtung gekennzeichnet, die derart programmiert ist, dass diese ein erfindungsgemäßes Verfahren ausführen kann.

Eine für ein Umschalten von einem Vollbetrieb in einen Teilbetrieb einer Brennkraftmaschine vorgesehene Erhöhung des Liefergrads für den weiterhin aktiv betriebenen Brennraum ist grundsätzlich unabhängig von einer möglichen Einstellbarkeit des Drucks in einem Saugrohr der Brennkraftmaschine, wie dies beispielsweise durch eine Aufladung erreicht werden kann, anwendbar. Bei der erfindungsgemäßen Brennkraftmaschine kann es sich daher grundsätzlich auch um eine nicht-aufgeladene Brennkraftmaschine, d.h. eine, bei der der Verbrennungsmotor als sogenannter Saugmotor ausgebildet ist, handeln. Vorzugsweise kann jedoch vorgesehen sein, dass insbesondere unmittelbar nach dem Umschalten von dem ersten Betriebszustand in den zweiten Betriebszustand der Druck in einem Saugrohr der Brennkraftmaschine erhöht wird, so dass eine Kompensation des weggefallenen Anteils der Antriebsleistung infolge der Deaktivierung eines oder mehrerer Brennräume im Teilbetrieb nicht lediglich durch eine Erhöhung des Liefergrads für den oder die weiterhin aktiv zu betreibenden Brennräume sondern auch durch eine Erhöhung der Brennraumfüllung in Folge eines erhöhten Saugrohrdrucks und damit durch die Möglichkeit einer Umsetzung einer größeren Menge von Kraftstoff realisiert wird.

Eine erfindungsgemäße Brennkraftmaschine kann demnach Mittel zur Erhöhung des Drucks in einem Saugrohr der Brennkraftmaschine aufweisen. Bei diesen Mitteln kann es sich insbesondere um einen in einen Frischgasstrang der Brennkraftmaschine integrierten Verdichter handeln. Besonders bevorzugt kann der Verdichter Teil eines Abgasturboladers sein, der weiterhin noch eine in einen Abgasstrang der Brennkraftmaschine integrierte Turbine aufweist, durch die der Verdichter antreibbar ist. Ein solcher Abgasturbolader kann auch mit einer Vorrichtung zur variablen Turbinenanströmung (VTG) versehen sein, durch die eine relativ schnelle und wirkungsvolle Beeinflussung des Drucks in dem Saugrohr der Brennkraftmaschine ermöglicht wird.

Als "Saugrohr" wird der letzte Abschnitt des Frischgasstrangs der Brennkraftmaschine verstanden, in dem die Frischgasströmung auf Teilströmungen, die den einzelnen Brennräumen des Verbrennungsmotors zugeführt werden, aufgeteilt wird, wozu das Saugrohr eine der Anzahl an Brennräumen des Verbrennungsmotors entsprechende Anzahl an Gasführungskanälen ausbildet.

Eine Vorrichtung zur variablen Turbinenanströmung (VTG) kann in bekannter Weise eine Mehrzahl von in einem Einlass einer Turbine des Abgasturboladers angeordnete Leitschaufeln umfassen, die individuell drehbar ausgebildet sind, wobei diese gemeinsam mittels einer Verstellvorrichtung verstellbar sind. In Abhängigkeit von den Drehstellungen der Leitschaufeln verengen diese den freien Strömungsquerschnitt in dem Einlass der Turbine mehr oder weniger und beeinflussen zudem den Abschnitt der primären Anströmung des Turbinenlaufrads und die Ausrichtung dieser Anströmung.

Eine Beeinflussung des Drucks in dem Saugrohr der Brennkraftmaschine wird bis zum Erreichen eines für den Teilbetrieb vorgesehenen Zielwerts, ausgehend von einem für den Vollbetrieb vorgesehenen Ausgangswert, in der Regel eine relativ lange Zeitdauer benötigen, die insbesondere auch deutlich länger als die Zeitdauer sein kann, die für ein Umschalten von der ersten Ventilerhebungskurve auf die zweite Ventilerhebungskurve für das dem ersten Brennraum zugeordnete Einlassventil erforderlich ist. Dies ist jedoch bei einem erfindungsgemäßen Verfahren unproblematisch, da zur Erzielung einer möglichst momentneutralen und gleichzeitig hinsichtlich des Wirkungsgrads möglichst optimalen Umschaltung vom Vollbetrieb in den Teilbetrieb zunächst das sehr schnell umsetzbare Umschalten zwischen den zwei Ventilerhebungskurven mit dem Ziel einer kurzfristigen Maximierung des Liefergrads vorgesehen ist, an die sich dann eine kontinuierliche Erhöhung des Saugrohrdrucks anschließen kann, wodurch ermöglicht wird, die Steuerzeiten des dem ersten Brennraum zugeordneten Einlassventils mittels des Phasenstellers ergänzend zu verstellen (wodurch wieder eine Absenkung des Liefergrads bewirkt wird), so dass sich die allmähliche Erhöhung des Saugrohrdrucks und die gleichzeitig stattfindende Verstellung der Steuerzeiten hinsichtlich der Wirkung auf das von dem Verbrennungsmotor erzeugte Drehmoment kompensieren können, Dadurch wird nicht nur eine Momentenneutralität zum Zeitpunkt des Wechsels zwischen den Ventilerhebungskurven sondern insgesamt über die gesamte Umschaltung vom Vollbetrieb in den Teilbetrieb erreicht. Somit kann erfindungsgemäß insbesondere vorgesehen sein, dass durch das Umschalten von der ersten Ventilerhebungskurve auf die zweite Ventilerhebungskurven eine Erhöhung des Liefergrads realisiert wird, die größer ist, als dies für einen Betrieb nach einer Anfangsphase, während der die Wirkung einer Erhöhung des Drucks im Saugrohr noch nicht vollständig gegeben ist, vorgesehen ist. Ausgehend von dieser zunächst relativ großen Erhöhung des Liefergrads kann dann durch eine entsprechende Änderung der Steuerzeiten für das dem ersten Brennraum zugeordnete Einlassventil, wodurch der Liefergrad wieder ein Stück weit und gegenläufig zu dem Anstieg des Drucks im Saugrohr reduziert wird, ein im Wesentlichen konstantes Antriebsmoment während der Anfangsphase und darüber hinaus realisiert werden.

Gegebenenfalls kann es erforderlich sein, auch bei einem Vorgehen gemäß dem erfindungsgemäßen Verfahren den Zündwinkel für zumindest den ersten Brennraum vor dem Umschalten relativ spät einzustellen, um eine gewollte Drehmomentanpassung und insbesondere Drehmomentabsenkung (infolge eines verschlechterten Wirkungsgrads) zur Vorbereitung der Umschaltung zu erreichen. In diesem Fall kann es sinnvoll sein, für das Umschalten und insbesondere zeitgleich mit dem Umschalten von dem ersten Betriebszustand in den zweiten Betriebszustand den zuvor relativ spät eingestellten Zündwinkel für den ersten Brennraum in Richtung früh zu verstellen, so dass unmittelbar mit der Umschaltung nicht nur eine Maximierung des Liefergrads sondern auch des Wirkungsgrads erreicht wird.

Da durch das Umschalten von der ersten Ventilerhebungskurve auf die zweite Ventilerhebungskurve für das dem ersten Brennraum zugeordnete Einlassventil eine möglichst weitgehende Erhöhung des Liefergrads realisiert werden soll, kann dies dazu führen, dass sich die Brennprozesse, die im Rahmen des thermodynamischen Kreisprozesses in diesem Brennraum ablaufen, kurzzeitig der Klopfgrenze nähern oder dass die Klopfgrenze sogar ohne Gegenmaßnahmen überschritten werden könnte. Um dies zu vermeiden kann gemäß einer bevorzugten Ausführungsform eines erfindungsgemäßen Verfahrens, bei dem vor dem Umschalten ein relativ spät eingestellter Zündwinkel vorgesehen war, der für das Umschalten in Richtung früh verstellt wurde, vorgesehen sein, dass nach dem Umschalten von dem ersten Betriebszustand in den zweiten Betriebszustand der Zündwinkel nach der Frühverstellung wieder in Richtung spät verstellt wird, um (ergänzend) die Klopfgefahr zu reduzieren.

Zur Realisierung eines möglichst vorteilhaften Teilbetriebs der Brennkraftmaschine kann in einer bevorzugten Ausführungsform eines erfindungsgemäßen Verfahrens vorgesehen sein, dass für ein Umschalten von dem ersten Betriebszustand in den zweiten Betriebszustand eine Ventilüberschneidung, d.h. ein zeitgleiches Öffnen der dem ersten Brennraum zugeordneten Einlass- und Auslassventile, angepasst wird. Dies kann insbesondere dadurch erreicht werden, dass zumindest das Auslassschließen oder die Auslasssteuerzeiten insgesamt (d.h. zusätzlich auch das Auslassöffnen) für das entsprechende Auslassventil nach früh oder spät, beispielsweise um zwischen 0°KW und 20°KW, verstellt werden.

Ein solches Verstellen der Auslasssteuerzeiten kann ebenfalls mittels eines Phasenstellers erfolgen, durch den eine Phasenlage des oder der Auslassnocken, gegebenenfalls einer den oder die Auslassnocken integrierenden Nockenwelle insgesamt, gegenüber einem eine Rotation des oder der Auslassnocken bewirkenden Antriebsrad verdreht werden kann. Eine erfindungsgemäße Brennkraftmaschine kann demnach auch einen Phasensteller zur Änderung der Steuerzeiten für das dem ersten Brennraum und/oder dem zweiten Brennraum zugeordnete Auslassventil aufweisen. Da solche Phasensteller in der Regel jedoch relativ träge arbeiten, kann in einer bevorzugten Ausführungsform des erfindungsgemäßen Verfahrens vorgesehen sein, dass von einer Verwendung eines ersten Auslassnockens zu der Verwendung eines zweiten Auslassnockens für die Betätigung des dem ersten Brennraum zugeordneten Auslassventils gewechselt wird, um ein entsprechendes Verstellen der Auslasssteuerzeiten zu realisieren. Dabei kann insbesondere vorgesehen sein, dass der zweite Auslassnocken im Vergleich zu dem ersten Auslassnocken ein relativ spätes Auslassschließen bewirkt, wenn für den ersten Betriebszustand ein Einlassschließen vor UT, d.h. ein Miller-Verfahren, vorgesehen war, oder relativ frühes Auslasssschließen bewirkt, wenn für den ersten Betriebszustand ein Einlassschließen nach UT, d.h. ein Atkinson-Verfahren, vorgesehen war. Eine erfindungsgemäße Brennkraftmaschine kann dafür zumindest zwei Auslassnocken für das dem ersten Brennraum zugeordnete Auslassventil umfassen, wobei zwischen deren Nutzung mittels einer Umschaltvorrichtung umgeschaltet werden kann.

Gegenstand der Erfindung ist auch eine Steuerungsvorrichtung mit einem Speicher, wobei in dem Speicher ein Computerprogramm hinterlegt ist, bei dessen Ausführung ein erfindungsgemäßes Verfahren durchführbar ist.

Die Erfindung betrifft zudem ein Computerprogramm mit einem Programmcode zum Ausführen eines erfindungsgemäßen Verfahrens, wenn das Computerprogramm auf einem Computer ausgeführt wird.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: eine erfindungsgemäße Brennkraftmaschine in einer schematischen Darstellung;
- Fig. 2:: in einem schematischen Längsschnitt den Verbrennungsmotor der Brennkraftmaschine gemäß der Fig. 1;
- Fig. 3:: einen Nockenträger für einen Verbrennungsmotor gemäß der Fig. 1;
- Fig. 4:: ein Nockenpaar des Nockenträgers gemäß der Fig. 3;
- Fig. 5:: einen Abschnitt des Nockenträgers gemäß der Fig. 3 und einen Umschaltaktuator in einer schematischen Darstellung;
- Fig. 6:: verschiedene Hubverläufe für die Gaswechselventile eines Verbrennungsmotors gemäß der Fig. 2;
- Fig. 7:: in einem Diagramm die quantitativen Verläufe verschiedener Betriebsparameter einer Brennkraftmaschine gemäß der Fig. 1 vor und nach einem Umschalten von einem Vollbetrieb in einen Teilbetrieb; und
- Fig. 8:: ein Schaubild, in dem für einen beispielhaften Miller-Vollbetrieb (durchgezogene Linie) und andererseits einen Atkinson-Teilbetrieb (gestrichelte Linie) diejenigen Verhältnisse zwischen dem Schließzeitpunkt SZ der Einlassventile und dem Saugrohrdruck pₛ dargestellt sind, die jeweils zum Erreichen eines definierten Drehmoments, das durch den Verbrennungsmotor erzeugt werden soll, führen.

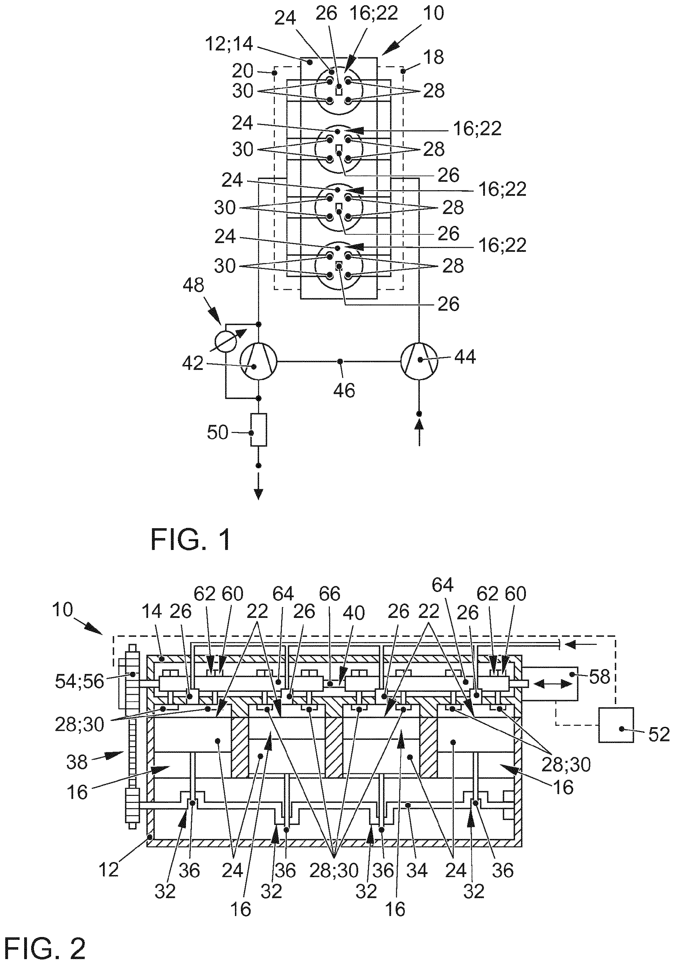

In der Fig. 1 ist schematisch eine erfindungsgemäße Brennkraftmaschine dargestellt. Mittels der Brennkraftmaschine kann beispielsweise ein Kraftfahrzeug (nicht dargestellt) angetrieben werden.

Die Brennkraftmaschine umfasst einen in weiteren Details auch in der Fig. 2 dargestellten Verbrennungsmotor 10, der insbesondere nach dem Otto-Prinzip betreibbar ist. Der Verbrennungsmotor 10 bildet in einem Verbund aus Zylinderkurbelgehäuse 12 und Zylinderkopf 14 mehrere (hier: vier) Zylinder 16 aus. Die Zylinder 16 sind einlassseitig mit einem Saugrohr 18 eines Frischgasstrangs und auslassseitig mit einem Abgaskrümmer 20 eines Abgasstrangs der Brennkraftmaschine gasführend verbunden. In bekannter Weise wird in Brennräumen 22, die von den Zylindern 16 zusammen mit darin geführten Kolben 24 sowie dem Zylinderkopf 14 begrenzt sind, Frischgas (im Wesentlichen Luft) mit Kraftstoff verbrannt. Der Kraftstoff kann dazu mittels Injektoren 26 direkt in die Brennräume 22 eingespritzt werden. Das bei der Verbrennung des Kraftstoff-Frischgas-Gemischs entstehende Abgas wird über den Abgasstrang abgeführt.

Die Zufuhr des Frischgases in die Brennräume 22 und die Abfuhr des Abgases aus den Brennräumen 22 wird über vier Gaswechselventile, nämlich zwei Einlassventile 28 und zwei Auslassventile 30, je Brennraum 22 gesteuert, die von einem in der Fig. 1 nicht dargestellten Ventiltrieb des Verbrennungsmotors 10 betätigt werden. Der Ventiltrieb umfasst gemäß der Fig. 2 eine Kurbelzapfen 32 ausbildende Kurbelwelle 34, wobei die Kurbelzapfen 32 mit den Kolben 24 über Pleuel 36 verbunden sind. Dadurch werden Linearbewegungen der Kolben 24 in eine Rotation der Kurbelwelle 34 gewandelt, wobei die Rotation der Kurbelwelle 34 wiederum einen periodischen Richtungswechsel der Linearbewegungen der Kolben 24 bewirkt. Die Rotation der Kurbelwelle 34 wird zudem über ein Steuergetriebe, beispielsweise ein Zahnriemengetriebe 38, auf zwei Nockenwellen 40 übertragen, von denen jede über beispielsweise Kipp- oder Schlepphebel (nicht dargestellt) zwei Gaswechselventile 28, 30 je Brennraum 22 betätigt. Von den Nockenwellen 40 ist eine als Einlassnockenwelle ausgebildet, d.h. diese betätigt alle Einlassventile 28, während die andere als Auslassnockenwelle ausgebildet ist und folglich alle Auslassventile 30 betätigt.

Die Brennkraftmaschine umfasst weiterhin einen Abgasturbolader. Dieser weist eine in den Abgasstrang integrierte Turbine 42 sowie einen in den Frischgasstrang integrierten Verdichter 44 auf. Ein von dem Abgasstrom rotierend angetriebenes Laufrad der Turbine 42 treibt über eine Welle 46 ein Laufrad des Verdichters 44 an. Die so bewirkte Rotation des Laufrads des Verdichters 44 verdichtet das durch diesen hindurch geführte Frischgas. Mittels eines Wastegates 48 kann eine Ladedruckbegrenzung erzielt werden, indem in einem Betrieb des Verbrennungsmotors 10 mit hohen Drehzahlen und/oder Lasten ein Teil des Abgasstroms an der Turbine 42 vorbei geführt wird. Weiterhin ist eine Abgasnachbehandlungsvorrichtung 50, beispielsweise in Form eines Dreiwegekatalysators, in den Abgasstrang integriert.

Der Verbrennungsmotor 10 umfasst weiterhin für die Nockenwellen 40 jeweils einen von einer Steuerungsvorrichtung 52 (Motorsteuerung) angesteuerten Phasensteller 54. Durch die Phasensteller 54 wird ermöglicht, die Steuerzeiten und damit die Öffnungsphasen der dazugehörigen Gaswechselventile 28, 30 zu verändern und konkret zu verschieben. die Phasensteller 54 sind in bekannter Weise (vgl. beispielsweise DE 10 2013 223 112 A1) in jeweils ein Getrieberad 56 der Nockenwellen 40 integriert. Dementsprechend können die Phasensteller 54 der Nockenwellen 40 jeweils einen drehfest mit der jeweiligen Nockenwelle 40 verbundenen Flügelrotor (nicht dargestellt) aufweisen, der jeweils in Grenzen drehbar innerhalb eines Stators (nicht dargestellt) des Phasenstellers 54 angeordnet ist. Der Stator bildet auf seiner zylindrischen Außenfläche eine Zahnkontur für den Eingriff von Zähnen eines Zahnriemens des Zahnriemengetriebes 38 aus. Zwischen dem Flügelrotor und dem Stator der Phasensteller 54 können mehrere Druckkammern ausgebildet sein, die, gesteuert durch ein Phasenstellerventil (nicht dargestellt), gezielt mit einer Flüssigkeit, insbesondere einem Öl, befüllt werden können, um den Flügelrotor innerhalb des Stators definiert zu verdrehen, wodurch, dem Ziel einer Veränderung der Steuerzeiten der dazugehörigen Gaswechselventile 28, 30 entsprechend, der Phasenwinkel zwischen der jeweiligen mit dem Flügelrotor verbundenen Nockenwelle 40 und dem mit der Kurbelwelle 32 drehantreibend verbundenen Stator verändert wird.

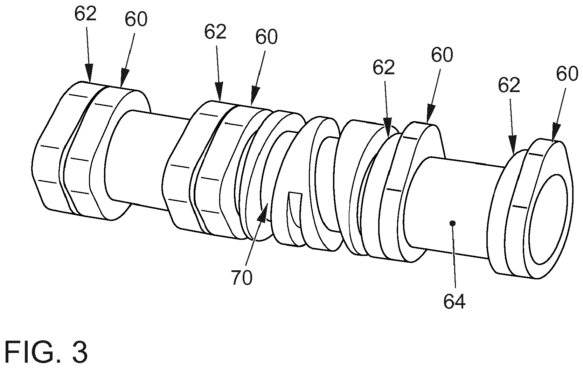

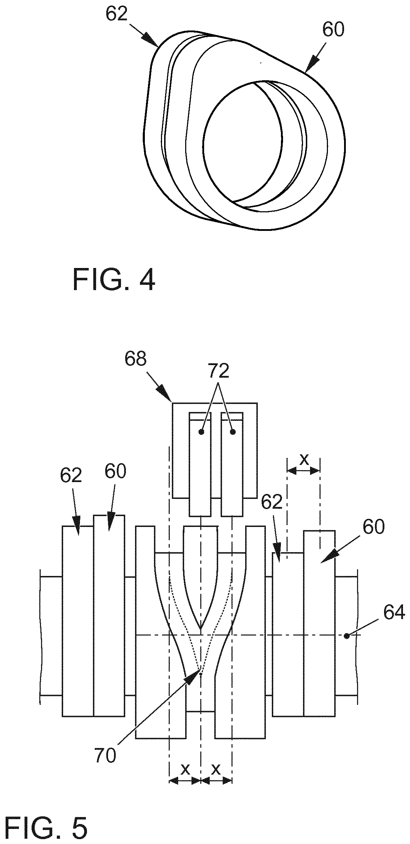

Die Brennkraftmaschine umfasst weiterhin noch eine Umschaltvorrichtung 58, mittels der sowohl für die Einlassventile 28 als auch die Auslassventile 30 von einer Betätigung mittels eines ersten Nockens 60 zu einer Betätigung mittels eines zweiten Nockens 62 umgeschaltet werden kann. Diese Umschaltvorrichtung 58 ist ebenfalls von der Steuerungsvorrichtung 52 ansteuerbar und in der Fig. 2 nur schematisch angedeutet. Die Funktion der Umschaltvorrichtung 58 beruht auf einer längsaxialen Verschiebbarkeit von hülsenförmigen Nockenträgern 64 (vgl. auch Fig. 3), die drehfest auf einer Grundwelle 66 angeordnet sind, mittels jeweils eines Umschaltaktuators 68 (vgl. Fig. 4), wobei die Nockenträger 64 für jedes der von diesen betätigbaren Einlassventile 28 und Auslassventile 30 zwei unterschiedliche Nocken 60, 62 aufweisen (vgl. Fig. 3 und 4), die in Abhängigkeit von den eingestellten Verschiebestellungen der Nockenträger 64 alternativ mit den dazugehörigen Einlassventilen 28 und Auslassventilen 30 zusammenwirken.

In dem Ausgestaltungsbeispiel, wie es in den Fig. 2 und 3 dargestellt ist, umfasst jeder der Nockenträger 40 insgesamt vier Nockenpaare, die jeweils einem Gaswechselventil 28, 30 der Brennkraftmaschine zugeordnet sind. Mittels der Nocken 60, 62, die von einem derartigen Nockenträger 64 ausgebildet sind, werden somit entweder die Einlassventile 28 oder die Auslassventile 30 von insgesamt zwei benachbarten Zylindern 16 eines Verbrennungsmotors 10 gemäß den Fig. 1 und 2, bei dem jedem Zylinder 16 zwei Einlassventile 28 und zwei Auslassventile 30 zugeordnet sind, betätigt. Zwischen den beiden den Gaswechselventilen 28, 30 eines ersten Zylinders 16 zugeordneten Nockenpaaren und den beiden den Gaswechselventilen 28 ,30 eines zweiten Zylinders 16 zugeordneten Nockenpaaren bildet der in der Fig. 3 dargestellte Nockenträger 64 weiterhin noch eine Schaltkulisse in Form einer Y-förmigen Führungsnut 70 aus. Durch ein Zusammenwirken dieser Führungsnut 70 mit Mitnehmern 72 des zugehörigen Umschaltaktuators 68 kann der Nockenträger 64 axial um die Distanz x verschoben und dadurch jeweils ein ausgewählter Nocken 60, 62 jedes Nockenpaars mit dem dazugehörigen Gaswechselventil 28, 30 in Wirkverbindung gebracht werden. Gemäß der Fig. 5 kann hierzu beispielsweise ausgehend von der dargestellten Funktionsstellung, in der die Gaswechselventile 28, 30 jeweils mit dem rechten (ersten) Nocken 60 jedes Nockenpaars in Wirkverbindung stehen, der rechte Mitnehmer 72 ausgefahren und der Nockenträger 64 dadurch, im Zusammenwirken mit seiner Rotation (in der Fig. 5 nach oben) um die Distanz x nach rechts verschoben werden. Infolge des Auslaufens der Y-förmigen Führungsnut 70 in dem mittleren, in der Fig. 5 unteren Abschnitt wird der rechte Mitnehmer 72 dabei wieder in die eingefahrene Stellung zurück bewegt. Nach einem solchen Verschieben des Nockenträgers 64 um die Distanz x befinden sich dann jeweils die linken (zweiten) Nocken 62 jedes Nockenpaars in Wirkverbindung mit dem dazugehörigen Gaswechselventil 28, 30. Ein solches Verschieben des Nockenträgers 64 um die Distanz x nach rechts führt weiterhin dazu, dass der linke Mitnehmer 72 In Überdeckung mit dem linken Abschnitt der Y-förmigen Führungsnut 70 gebracht wurde, so dass durch ein Ausfahren dieses Mitnehmers 72 der Nockenträger 64 wieder um die Distanz x nach links verschoben werden kann.

Vorgesehen ist, dass für einen Teilbetrieb der Brennkraftmaschine eine Teilmenge und insbesondere die Hälfte der Brennräume 22, konkret die beiden mittigen Brennräume 22, deaktiviert werden können, indem eine Zufuhr von Kraftstoff zu den dazugehörigen Injektoren 26 unterbrochen und die diesen zugeordneten Gaswechselventile 28, 30 nicht mehr betätigt, d.h. geöffnet werden. Hierzu ist vorgesehen, dass jedes Nockenpaar, das den Gaswechselventilen 28, 30 eines solchen deaktivierbaren Brennraums 22 zugeordnet ist, einen zweiten Nocken 62 in Form eines sogenannten Nullnockens ausbildet, der keine Nockenerhebung aufweist und damit nicht zu einem Öffnen eines diesem zugeordneten Gaswechselventils 28, 30 führt. Bei dem Nockenträger 64 gemäß der Fig. 3 sind jeweils die linken Nocken 62 der beiden rechts von der Führungsnut 70 angeordneten Nockenpaare als entsprechende Nullnocken ausgebildet.

Bei einer Umschaltung von einem Vollbetrieb der Brennkraftmaschine, in dem sämtliche der Brennräume 22 mit niedrigen bis mittleren Lasten betrieben werden, in einen solchen Teilbetrieb werden in einem sehr kurzen Zeitraum, der in etwa einer Umdrehung der Kurbelwelle 32 entspricht, die Hälfte der Brennräume 22 deaktiviert, die somit nicht mehr zur Erzeugung einer Antriebsleistung durch den Verbrennungsmotor 10 beitragen können. Im Gegenteil, da die diesen Brennräumen 22 zugeordneten Kolben 24 von den Kolben 24 der weiterhin aktiv betriebenen Brennräume 22 mitgeschleppt werden müssen, ändern diese deaktivierten Brennräume 22 ihre Funktion von einem Leistungserzeuger zu einem Leistungsverbraucher.

Da ein solches Umschalten von dem Vollbetrieb in den Teilbetrieb regelmäßig in einer konstanten Betriebsphase der Brennkraftmaschine erfolgen soll, soll folglich dann auch die Antriebsleistung vor und nach der Umschaltung im Wesentlichen konstant bleiben. Daher muss das Ausfallen der deaktivierten Brennräume 22 von den weiterhin aktiv betriebenen Brennräumen 22 kompensiert werden. Die Last, mit der diese nach einem Umschalten betrieben werden, muss dazu erheblich erhöht und insbesondere in etwa verdoppelt werden. Hierzu muss innerhalb eines Zyklus der in den weiterhin aktiv betriebenen Brennräumen 22 durchgeführten thermodynamischen Kreisprozesse eine deutlich größere Menge an Kraftstoff umgesetzt werden, wozu eine in etwa entsprechend gesteigerte Menge von Frischgas erforderlich ist.

Diese erhöhte Menge an Frischgas soll einerseits durch eine Erhöhung des Drucks im Saugrohr 18 mittels üblicher Maßnahmen der Ladedruckregelung des Abgasturboladers erreicht werden. Durch eine höhere Verdichtung des Frischgases kann dann mehr Frischgas in die Brennräume 22 eingebracht werden, so dass auch eine entsprechend erhöhte Menge an Kraftstoff umsetzbar ist.

Weiterhin ist vorgesehen, dass auch der Liefergrad und damit das Verhältnis der nach Abschluss eines Ladungswechsels tatsächlich in den Brennräumen 22 enthaltenen Massen an Frischgas zu den theoretisch maximal möglichen Massen erhöht und insbesondere maximiert wird. Beide Maßnahmen in Kombination führen zu einer deutlichen Erhöhung der den weiterhin aktiv betriebenen Brennräumen 22 innerhalb eines Zyklus zugeführten Menge an Frischgas im Teilbetrieb im Vergleich zum dem dem Umschalten vorausgegangenen Vollbetrieb.

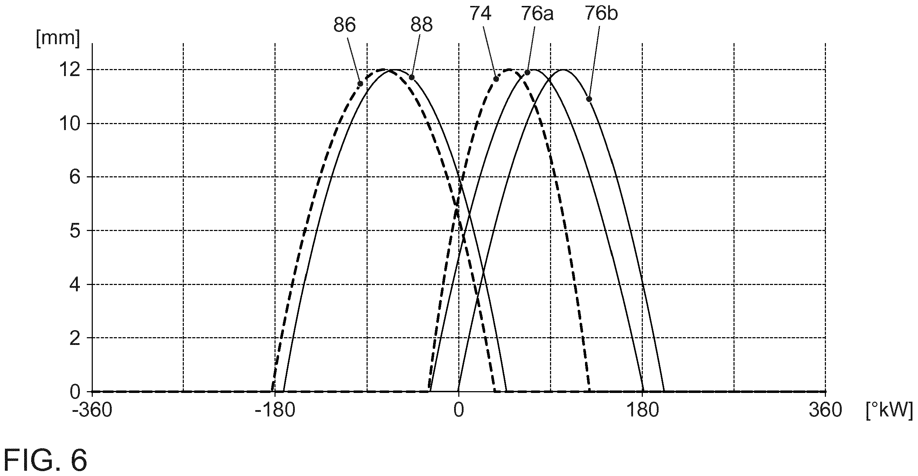

Die Wirkung der Liefergraderhöhung ist insbesondere auch deshalb relativ stark ausgeprägt, weil für die Brennkraftmaschine vorgesehen ist, dass diese in einem Vollbetrieb, der einem Umschalten in den Teilbetrieb vorausgeht, in einem sogenannten Miller-Zyklus betrieben wird, bei dem gemäß dem vorliegenden Ausgestaltungsbeispiel vorgesehen ist, die Einlassventile 28 relativ früh und demnach deutlich (beispielsweise ca. 60°) vor UT zu schließen, wodurch sich eine nicht vollständige Füllung der Brennräume ergibt. Dies ist in der Fig. 6 anhand der für alle Einlassventile 28 im Vollbetrieb der Brennkraftmaschine vorgesehenen Hubverlaufs 74 (erste Ventilerhebungskurve) gezeigt. Nach einem Umschalten in den Teilbetrieb, wofür nicht nur die den Gaswechselventilen 28, 30 der zu deaktivierenden Brennräume 22 zugeordneten Nocken 60, 62 (jeweils hin zu einem Nullnocken) sondern auch (zumindest teilweise) die den Gaswechselventilen 28, 30 der weiterhin aktiv zu betreibenden Brennräume 22 zugeordneten Nocken 60, 62 gewechselt werden, schließen die Einlassventile 28 dieser weiterhin aktiv zu betreibenden Brennräume 22 dann nicht mehr relativ früh sondern hinsichtlich einer Maximierung des Liefergrads in der Nähe von und konkret einige Grad nach UT, wie dies anhand des in der Fig. 6 dargestelltenHubverlaufs 76a (zweite Ventilerhebungskurve) verdeutlicht ist.

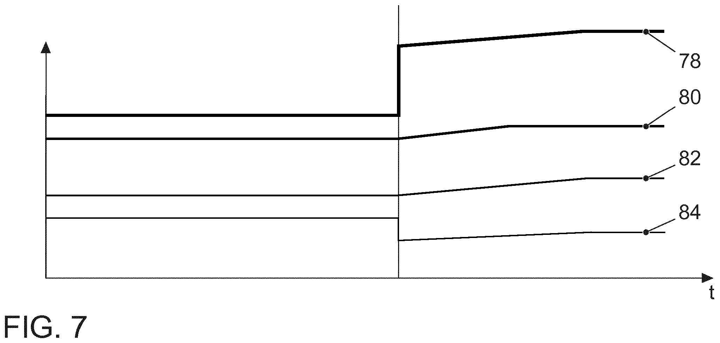

In der Fig. 7 sind zusammenfassend diejenigen Maßnahmen aufgezeigt, die vorgesehen sind, um ein Umschalten der Brennkraftmaschine von einem Vollbetrieb in einen Teilbetrieb möglichst momentenneutral und folglich ohne spürbare kurzzeitige Verringerung der von der Brennkraftmaschine erzeugten Antriebsleistung (Antriebsruckeln) zu realisieren.

In dem Diagramm gemäß der Fig. 7 ist qualitativ der Verlauf verschiedener Betriebsparameter der Brennkraftmaschine, konkret der für die Einlassventile 28 derjenigen Brennräume 22, die auch im Teilbetrieb aktiv betrieben werden, vorgesehene Schließzeitpunkt (Verlaufslinie 78), der für die Auslassventile 30 derselben Zylinder 16 vorgesehene Schließzeitpunkt (Verlaufslinie 80), der Druck im Saugrohr (Verlaufslinie 82) sowie der Zündwinkel (Verlaufslinie 84), über der Zeit t (Horizontalachse) dargestellt. Die linke Hälfte des durch einen vertikalen Strich geteilten Diagramms zeigt dabei die entsprechenden Betriebsparameter für den Vollbetrieb der Brennkraftmaschine, während die rechte Hälfte den Verlauf der Betriebsparameter während einer Anfangsphase des Teilbetriebs zeigt. Die Lage der vertikalen Linie entspricht somit dem Umschaltzeitpunkt beziehungsweise dem Umschaltvorgang, der relativ schnell, nämlich innerhalb einer Umdrehung der Nockenwellen 40 durchgeführt wird und innerhalb einer Umdrehung der Kurbelwelle 34 wirksam wird.

In demselben kurzen Zeitraum wird auch die Liefergraderhöhung wirksam, die durch das Umschalten zwischen den zwei Nocken 60, 62, die sich hinsichtlich der durch diese bewirkten Ventilerhebungskurven und damit Steuerzeiten unterscheiden und mittels denen die Einlassventile 28 der weiterhin aktiv zu betreibenden Brennräume 22 betätigbar sind, erreicht wird, während die Wirkung der Erhöhung des Drucks im Saugrohr 18 nur relativ langsam bis zu einem vorgesehenen Maße ansteigt.

Diese verzögerte Wirkung der Erhöhung des Drucks im Saugrohr 18 wird durch die schnell wirksam werdende Liefergraderhöhung kompensiert, indem für die den auch im Teilbetrieb aktiv zu betreibenden Brennräumen 22 zugeordneten Einlassventile 28 mittels der dafür vorgesehenen (zweiten) Nocken 62 zunächst ein hinsichtlich eines maximal möglichen Liefergrads vorgesehener Hubverlauf vorgesehen ist. Dieser Hubverlauf wird jedoch im direkten Anschluss an das Umschalten mittels des der Einlassnockenwelle 40 zugeordneten Phasenstellers 54 der Brennkraftmaschine weiter in Richtung spät verschoben. Dies erfolgt ungefähr solange, bis der Druck im Saugrohr 18 den vorgesehenen Wert erreicht hat (vgl. Hubverlauf 76b in der Fig. 6).

Zu erkennen ist auch, dass die durch die zweiten Nocken 62 bewirkte zweite Ventilerhebungskurve (Hubverläufe 76a, 76b) breiter als die durch die ersten Nocken 60 bewirkte erste Ventilerhebungskurve (Hubverlauf 74) ist, was dazu dient, trotz der Spätverstellung des Schließzeitpunkts der zweiten Ventilerhebungskurve gemäß dem Hubverlaufs 76a, einen im Vergleich zu der ersten Ventilerhebungskurve (Hubverlauf 74) im Wesentlichen gleichen Öffnungszeitpunkt zu realisieren.

Die Fig. 7 zeigt noch, dass vorgesehen ist, vor dem Umschalten den Zündwinkel (vgl. Verlaufslinie 84) für die Brennräume 22 relativ spät einzustellen, um eine gewollte Drehmomentanpassung und insbesondere Drehmomentabsenkung (infolge eines verschlechterten Wirkungsgrads) zur Vorbereitung der Umschaltung zu erreichen. Gleichzeitig mit dem Umschalten von dem ersten Betriebszustand in den zweiten Betriebszustand wird dann der zuvor relativ spät eingestellten Zündwinkel schlagartig in Richtung früh verstellt, so dass unmittelbar mit der Umschaltung nicht nur eine Maximierung des Liefergrads sondern auch des Wirkungsgrads, jeweils mit dem Ziel eines möglichst momentenneutralen Umschaltens, erreicht wird.

Da der Hubverlauf 76a für die den im Teilbetrieb weiterhin aktiv betriebenen Brennräumen 22 zugeordneten Einlassventile 28, der hinsichtlich eines maximalen Liefergrads ausgelegt ist, ohne Gegenmaßnahmen zu einer stark erhöhten Klopfneigung führen würde, ist gemäß der Fig. 7 (vgl. Verlaufslinie 84)vorgesehen, dass der Zündwinkel nach dem Umschalten wieder etwas (weniger als dies vor dem Umschalten vorgesehen war) in Richtung spät verstellt wird, um einer solchen Erhöhung der Klopfneigung entgegenzuwirken.

In der Fig. 7 ist weiterhin dargestellt (vgl. Verlaufslinie 80), dass zeitgleich mit der Umschaltung von dem Vollbetrieb in den Teilbetrieb eine Verstellung des Schließens der den weiterhin aktiv betriebenen Brennräumen 22 zugeordneten Auslassventile 30 nach spät mittels des der Auslassnockenwelle 40 zugeordneten Phasenstellers 54 erfolgt, wodurch eine möglichst optimale Anpassung der Ventilüberschneidungen der Einlassventile 28 und Auslassventile 30 erreicht werden kann. Die Fig. 6 zeigt hierzu noch den entsprechenden Hubverlauf 86, wie er für die Auslassventile 30 im Vollbetrieb vor der Umschaltung vorgesehen ist, sowie den Hubverlauf 88, wie er nach einer Beendigung der Beeinflussung durch den Phasensteller 54 im Teilbetrieb für die dann noch betätigten Auslassventile 30 vorgesehen ist.

Da in dem Ausführungsbeispiel eine Spätverstellung der Steuerzeiten der Auslassventile 30 der im Teilbetrieb weiterhin aktiv betriebenen Brennräume 22 mittels des Phasenstellers 54 vorgesehen ist, kann vorgesehen sein, dass für diese keine Umschaltbarkeit mittels der Umschaltvorrichtung 58 vorgesehen ist. Hinsichtlich der Auslassnockenwelle 40 kann sich die Umschaltbarkeit für eine Betätigung mittels zwei Nocken 60, 62 demnach auf diejenigen Auslassventile 30 beschränken, die in einem Teilbetrieb der Brennkraftmaschine nicht mehr betätigt werden. Alternativ können aber auch zwei Nocken 60, 62 für die auch im Teilbetrieb zu betätigenden Auslassventile 30 vorgesehen sein, die identische Nockenlaufbahnen aufweisen, so dass die Umschaltung für die Betätigung der diesen zugeordneten Auslassventile 30 ohne Auswirkung bleibt.

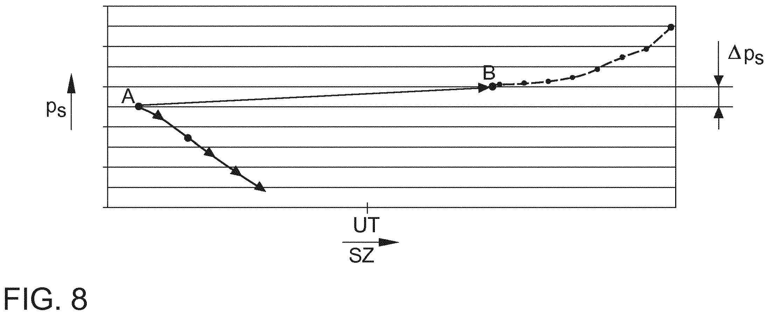

Das Schaubild gemäß der Fig. 8 verdeutlicht nochmals den durch das erfindungsgemäße Verfahren erzielbaren Vorteil. Dort sind einerseits für einen beispielhaften Miller-Vollbetrieb (durchgezogene Linie) und andererseits einen Atkinson-Teilbetrieb (gestrichelte Linie) diejenigen Verhältnisse zwischen dem Schließzeitpunkt SZ der Einlassventile 28 und dem Saugrohrdruck pₛ dargestellt, die jeweils zum Erreichen eines definierten Drehmoments, das durch den Verbrennungsmotor 10 erzeugt werden soll, führen. Zu erkennen ist, dass jeweils der Saugrohrdruck pₛ umso höherer sein muss, je weiter die Schließzeitpunkte SZ vom UT entfernt liegen.

Für ein Umschalten vom Vollbetrieb zum Teilbetrieb kann nunmehr vorgesehen sein, dass der Verbrennungsmotor 10 unmittelbar vor dem Umschalten in einem Miller-Vollbetrieb betrieben wird, wobei mittels des Phasenstellers ein frühestmögliches Schließen der Einlassventile 28 vorgesehen ist (vgl. Punkt A in der Fig. 8). Der dabei benötigte Saugrohrdruck pₛ ist unter Berücksichtigung des zu erzielenden Drehmoments maximal. Durch einen Wechsel der Nocken 60, 62, durch die diejenigen Einlassventile 28, die den auch im Teilbetrieb zu betreibenden Brennräumen 22 zugeordnet sind, betätigt werden, kann kurzfristig auf einen Teilbetrieb umgeschaltet werden, bei dem die Schließzeitpunkte SZ dieser Einlassventile 28 hinsichtlich eines möglichst großen Liefergrads ausgelegt sind (vgl. Punkt B in der Fig. 8). Infolge dieses maximierten Liefergrads ist die Differenz Δpₛ zwischen dem benötigten Saugrohrdruck pₛ im Punkt B und demjenigen im Punkt A möglichst klein, wodurch im Ergebnis eine zur Drehmomentanpassung vor einem Umschalten der Ventilerhebungskurven initiierte Spätverstellung der Zündzeitpunkte ebenfalls minimal gehalten werden kann. Dies wirkt sich entsprechend positiv auf den Wirkungsgrad des Betriebs des Verbrennungsmotors 10 aus.

Unmittelbar im Anschluss an den Wechsel der Nocken 60 ,62 ist erfindungsgemäß vorgesehen, dass die Steuerzeiten und damit auch die Schließzeitpunkte SZ der hier betrachteten Einlassventile 28 mittels des Phasenstellers 54 weiter in Richtung spät verschoben werden, wodurch ein Atkinson-Teilbetrieb des Verbrennungsmotors 10 realisiert wird. Dies ist ausgehend von der (End-)Stellung des Phasenstellers 54, den dieser in dem Miller-Vollbetrieb vor dem Umschalten eingenommen hatte, problemlos möglich, weil hierfür ein Verstellen des Phasenstellers 54 ausgehend von der bislang eingestellten Endstellung in Richtung der anderen Endstellung des Phasenstellers 54 vorgesehen ist.

Infolge der zunehmenden Spätverstellung der Schließzeitpunkte SZ der hier betrachteten Einlassventile 28 nach dem Umschalten verringert sich (gewollt zur Vermeidung von Klopfen beziehungsweise zur Geringhaltung von einer ein Klopfen verhindernden Spätverstellung der Zündzeitpunkte) der zunächst durch den Wechsel der Nocken 60, 62 maximierte Liefergrad. Dies bedingt eine Zunahme des Saugrohrdrucks pₛ gleichzeitig mit der Spätverstellung der Schließzeitpunkt SZ, um das von dem Verbrennungsmotor 10 erzeugte Drehmoment konstant zu halten. Dies wird durch eine parallel zu der Spätverstellung erfolgende Erhöhung des Saugrohrdrucks pₛ mittels der bereits beschriebenen Maßnahmen gewährleistet.

### Bezugszeichenliste

- 10: Verbrennungsmotor
- 12: Zylinderkurbelgehäuse
- 14: Zylinderkopf
- 16: Zylinder
- 18: Saugrohr
- 20: Abgaskrümmer
- 22: Brennraum
- 24: Kolben
- 26: Injektor
- 28: Gaswechselventil / Einlassventil
- 30: Gaswechselventil / Auslassventil
- 32: Kurbelzapfen
- 34: Kurbelwelle
- 36: Pleuel
- 38: Zahnriemengetriebe
- 40: Nockenwelle
- 42: Turbine
- 44: Verdichter
- 46: Welle
- 48: Wastegate
- 50: Abgasnachbehandlungsvorrichtung
- 52: Steuerungsvorrichtung
- 54: Phasensteller
- 56: Riemenrad
- 58: Umschaltvorrichtung
- 60: erster Nocken
- 62: zweiter Nocken
- 64: Nockenträger
- 66: Grundwelle
- 68: Umschaltaktuator
- 70: Führungsnut
- 72: Mitnehmer
- 74: Hubverlauf der Einlassventile im Vollbetrieb
- 76a: Hubverlauf der im Teilbetrieb betätigten Einlassventile vor einer Phasenverschiebung
- 76b: Hubverlauf der im Teilbetrieb betätigten Einlassventile nach einer Phasenverschiebung
- 78: Verlauf des Öffnungszeitpunkts der im Teilbetrieb betätigten Einlassventile
- 80: Verlauf des Schließzeitpunkts der im Teilbetrieb betätigten Auslassventile
- 82: Verlauf des Drucks im Saugrohr
- 84: Verlauf des Zündwinkels
- 86: Hubverlauf der Auslassventile im Vollbetrieb
- 88: Hubverlauf der im Teilbetrieb betätigten Auslassventile nach einer Phasenverschiebung

## Patentansprüche

1. Verfahren zum Betreiben einer Brennkraftmaschine mit einem Verbrennungsmotor (10), der mindestens zwei Brennräume (22) ausbildet, die von in einem Zylindergehäuse (12) ausgebildeten Zylindern (16) und darin geführten Kolben (24) begrenzt werden und in denen im Betrieb der Brennkraftmaschine thermodynamische Kreisprozesse durchführbar sind, wobei dann ein Gaswechsel in den Brennräumen (22) mittels jeweils mindestens eines Einlassventils (28) und jeweils mindestens eines Auslassventils (30) gesteuert wird und wobei
- ein erster Betriebszustand vorgesehen ist, in dem sowohl in einem ersten Brennraum (22) als auch in einem zweiten Brennraum (22) die thermodynamischen Kreisprozesse durchgeführt werden und
- ein zweiter Betriebszustand vorgesehen ist, in dem in dem ersten Brennraum (22) die thermodynamischen Kreisprozesse durchgeführt werden und in dem zweiten Brennraum (22) die thermodynamischen Kreisprozesse nicht durchgeführt werden,
wobei für ein Umschalten von dem ersten Betriebszustand in den zweiten Betriebszustand von einer Verwendung einer ersten Ventilerhebungskurve zu der Verwendung einer zweiten Ventilerhebungskurve für die Betätigung des dem ersten Brennraum zugeordneten Einlassventils (28) gewechselt wird und wobei zumindest das dem ersten Brennraum (22) zugeordnete Einlassventil (28) bei einer Betätigung gemäß der ersten Ventilerhebungskurve vor oder nach UT und gemäß der zweiten Ventilerhebungskurve näher an UT geschlossen wird, **dadurch gekennzeichnet, dass** nach dem Umschalten von dem ersten Betriebszustand in den zweiten Betriebszustand die Steuerzeiten für das dem ersten Brennraum (22) zugeordnete Einlassventil (28) mittels eines Phasenstellers (54)
- in Richtung spät verstellt werden, wenn für den ersten Betriebszustand ein Einlassschließen vor UT vorgesehen war oder
- in Richtung früh verstellt werden, wenn für den ersten Betriebszustand ein Einlassschließen nach UT vorgesehen war.

2. Verfahren gemäß Anspruch 1, **dadurch gekennzeichnet, dass** die erste Ventilerhebungskurve mittels eines ersten Einlassnockens (60) und die zweite Ventilerhebungskurve mittels eines zweiten Einlassnockens (62) auf das Einlassventil (28) aufgebracht wird.

3. Verfahren gemäß Anspruch 1 oder 2, **dadurch gekennzeichnet, dass** zumindest das dem ersten Brennraum (22) zugeordnete Einlassventil (28) bei einer Betätigung gemäß der ersten Ventilerhebungskurve vor UT - 60°KW oder nach UT + 100°KW und/oder bei einer Betätigung gemäß der zweiten Ventilerhebungskurve in dem Bereich zwischen UT ± 45°KW geschlossen wird.

4. Verfahren gemäß einem der vorhergehenden Ansprüche, **dadurch gekennzeichnet, dass** die Breite der zweiten Ventilerhebungskurve im Vergleich zu der Breite der ersten Ventilerhebungskurve
- größer ist, wenn für den ersten Betriebszustand ein Einlassschließen vor UT vorgesehen war oder
- kleiner ist, wenn für den ersten Betriebszustand ein Einlassschließen nach UT vorgesehen war.

5. Verfahren gemäß einem der vorhergehenden Ansprüche, **dadurch gekennzeichnet, dass** zumindest das dem ersten Brennraum (22) zugeordnete Einlassventil (28)
- weiter in Richtung spät bis zumindest UT + 25°KW verstellt wird, wenn für den ersten Betriebszustand ein Einlassschließen vor UT vorgesehen war oder
- in Richtung früh bis zumindest UT - 20°KW verstellt werden, wenn für den ersten Betriebszustand ein Einlassschließen nach UT vorgesehen war.

6. Verfahren gemäß einem der vorhergehenden Ansprüche, **dadurch gekennzeichnet, dass** für ein Umschalten von dem ersten Betriebszustand in den zweiten Betriebszustand eine Ventilüberschneidung der dem ersten Brennraum (22) zugeordneten Einlass-und/oder Auslassventile angepasst wird.

7. Verfahren gemäß Anspruch 6, **dadurch gekennzeichnet, dass** von einer Verwendung eines ersten Auslassnockens (60) zu der Verwendung eines zweiten Auslassnockens (62) für die Betätigung des dem ersten Brennraum (22) zugeordneten Auslassventils (30) gewechselt wird.

8. Verfahren gemäß Anspruch 7, **dadurch gekennzeichnet, dass** der zweite Auslassnocken (62) im Vergleich zu dem ersten Auslassnocken (60)
- ein relativ spätes Auslassschließen bewirkt, wenn für den ersten Betriebszustand ein Einlassschließen vor UT vorgesehen war oder
- ein relativ frühes Auslassschließen bewirkt, wenn für den ersten Betriebszustand ein Einlassschließen nach UT vorgesehen war.

9. Verfahren gemäß einem der vorhergehenden Ansprüche, **dadurch gekennzeichnet, dass** nach dem Umschalten von dem ersten Betriebszustand in den zweiten Betriebszustand der Druck in einem Saugrohr (18) der Brennkraftmaschine erhöht wird.

10. Verfahren gemäß einem der vorhergehenden Ansprüche, **dadurch gekennzeichnet, dass** für das Umschalten von dem ersten Betriebszustand in den zweiten Betriebszustand ein zuvor relativ spät eingestellter Zündwinkel für den ersten Brennraum (22) in Richtung früh verstellt wird.

11. Verfahren gemäß Anspruch 10, **dadurch gekennzeichnet, dass** der Zündwinkel nach der Frühverstellung wieder in Richtung spät verstellt wird.

12. Brennkraftmaschine mit einem Verbrennungsmotor (10), der mindestens zwei Brennräume (22) ausbildet, die von in einem Zylindergehäuse (12) ausgebildeten Zylindern (16) und darin geführten Kolben (24) begrenzt werden und in denen im Betrieb der Brennkraftmaschine thermodynamische Kreisprozeese durchführbar sind, wobei ein Gaswechsel in den Brennräumen (22) mittels jeweils eines Einlassventils (28) und eines Auslassventils (30) steuerbar ist und wobei für das einem ersten Brennraum (22) zugeordnete Einlassventil (28) sowohl zwei Ventilerhebungskurven, zwischen deren Nutzung mittels einer Umschaltvorrichtung (58) umgeschaltet werden kann, als auch ein Phasensteller (54) vorgesehen sind, **gekennzeichnet durch** eine Steuerungsvorrichtung (52), die derart programmiert ist, dass diese ein Verfahren gemäß einem der vorhergehenden Ansprüche ausführen kann.

13. Brennkraftmaschine gemäß Anspruch 12, **gekennzeichnet durch**
- zwei Auslassnocken (60, 62) für das dem ersten Brennraum (22) und/oder dem zweiten Brennraum (22) zugeordnete Auslassventil (30) und/oder Einlassventil (28), zwischen deren Nutzung mittels einer Umschaltvorrichtung (58) umgeschaltet werden kann und/oder
- Mittel zur Beeinflussung des Drucks in einem Saugrohr (18) der Brennkraftmaschine und/oder
- einen Phasensteller (54) zur Änderung der Steuerzeiten auch für das dem zweiten Brennraum (22) zugeordnete Einlassventil (28) und/oder zur Änderung der Steuerzeiten für das dem ersten Brennraum (22) und/oder dem zweiten Brennraum (22) zugeordnete Auslassventil (30).

## Claims

1. Method for operating an internal combustion engine having an IC engine (10) which forms at least two combustion chambers (22) delimited by cylinders (16) formed in a cylinder housing (12) and pistons (24) guided therein and in which thermodynamic cyclic processes can be carried out during operation of the internal combustion engine, wherein a gas exchange in the combustion chambers (22) is then controlled by means of, in each case, at least one intake valve (28) and, in each case, at least one exhaust valve (30), and wherein
- a first operating state is provided in which the thermodynamic cyclic processes are carried out both in a first combustion chamber (22) and in a second combustion chamber (22), and
- a second operating state is provided in which the thermodynamic cyclic processes are carried out in the first combustion chamber (22) and the thermodynamic cyclic processes are not carried out in the second combustion chamber (22),
wherein, for switching from the first operating state to the second operating state, a change is made from the use of a first valve lift curve to the use of a second valve lift curve for the actuation of the intake valve (28) assigned to the first combustion chamber (22), and wherein at least the intake valve (28) assigned to the first combustion chamber is closed before or after UT when actuated according to the first valve lift curve and nearer to UT when actuated according to the second valve lift curve, **characterized in that,** after switching from the first operating state to the second operating state, the control times for the intake valve (28) assigned to the first combustion chamber (22) are, by means of a phase adjuster (54),
- adjusted in the direction of retard if, for the first operating state, an intake closure was provided before UT, or
- adjusted in the direction of advance if, for the first operating state, an intake closure was provided after UT.

2. Method according to claim 1, **characterized in that** the first valve lift curve is applied to the intake valve (28) by means of a first intake cam (60), and the second valve lift curve is applied to the intake valve (28) by means of a second intake cam (62).

3. Method according to claim 1 or 2, **characterized in that** at least the intake valve (28) assigned to the first combustion chamber (22) is closed before UT - 60°KW or after UT + 1 00°KW when actuated according to the first valve lift curve and/or in the range between UT ± 45°KW when actuated according to the second valve lift curve.

4. Method according to any one of the preceding claims, **characterized in that** the width of the second valve lift curve in comparison to the width of the first valve lift curve
- is greater if, for the first operating state, an intake closure was provided before UT, or
- is smaller if, for the first operating state, an intake closure was provided after UT.

5. Method according to any one of the preceding claims, **characterized in that** at least the intake valve (28) assigned to the first combustion chamber (22) is adjusted
- further in the direction of retard up to at least UT + 25°KW if, for the first operating state, an intake closure was provided before UT, or
- in the direction of advance up to at least UT - 20°KW if, for the first operating state, an intake closure was provided after UT.

6. Method according to any one of the preceding claims, **characterized in that** a valve overlap of the intake and/or exhaust valves assigned to the first combustion chamber (22) is adapted for switching from the first operating state to the second operating state.

7. Method according to claim 6, **characterized in that** a change is made from a use of a first exhaust cam (60) to the use of a second exhaust cam (62) for actuating the exhaust valve (30) assigned to the first combustion chamber (22).

8. Method according to claim 7, **characterized in that** the second exhaust cam (62) in comparison to the first exhaust cam (60)
- effects a relatively retarded exhaust closure if, for the first operating state, an intake closure was provided before UT, or
- effects a relatively advanced exhaust closure if, for the first operating state, an intake closure was provided after UT.

9. Method according to any one of the preceding claims, **characterized in that**, after switching from the first operating state to the second operating state, the pressure in an intake manifold (18) of the internal combustion engine is increased.

10. Method according to any one of the preceding claims, **characterized in that,** for switching from the first operating state to the second operating state, an ignition angle previously set to be relatively retarded is adjusted in the direction of advance for the first combustion chamber (22).

11. Method according to claim 10, **characterized in that** the ignition angle is adjusted in the direction of retard again after the adjustment to advance.

12. Internal combustion engine having an IC engine (10) which forms at least two combustion chambers (22) delimited by cylinders (16) formed in a cylinder housing (12) and pistons (24) guided therein and in which thermodynamic cyclic processes can be carried out during operation of the internal combustion engine, wherein a gas exchange in the combustion chambers (22) can be controlled by means of, in each case, an intake valve (28) and an exhaust valve (30) and wherein, for the intake valve (28) assigned to a first combustion chamber (22), two valve lift curves, the use of which can be switched between by means of a switching device (58), as well as a phase adjuster (54) are provided, **characterized by** a control device (52) programmed in such a way that it can carry out a method according to one of the preceding claims.

13. Internal combustion engine according to claim 12, **characterized by**
- two exhaust cams (60, 62) for the exhaust valve (30) and/or intake valve (28) assigned to the first combustion chamber (22) and/or the second combustion chamber (22), the use of which can be switched between by means of a switching device (58), and/or
- means for influencing the pressure in an intake manifold (18) of the internal combustion engine, and/or
- a phase adjuster (54) for changing the control times also for the intake valve (28) assigned to the second combustion chamber (22) and/or for changing the control times for the exhaust valve (30) assigned to the first combustion chamber (22) and/or the second combustion chamber (22).

## Revendications

1. Procédé pour faire fonctionner un moteur à combustion interne comprenant un moteur à combustion (10), qui forme au moins deux chambres de combustion (22), qui sont délimitées par des cylindres (16) formés dans un logement de cylindres (12) et des pistons (24) guidés dans ceux-ci et dans lesquels, lorsque le moteur à combustion interne est en fonctionnement, des cycles thermodynamiques peuvent avoir lieu, un échange gazeux dans les chambres de combustion (22) étant alors commandé au moyen respectivement d'au moins une soupape d'admission (28) et d'au moins une soupape d'échappement (30) et dans lequel
- un premier état de fonctionnement est prévu, dans lequel les cycles thermodynamiques ont lieu aussi bien dans la première chambre de combustion (22) que dans la seconde chambre de combustion (22) et
- un second état de fonctionnement est prévu, dans lequel les cycles thermodynamiques ont lieu dans la première chambre de combustion (22) et les cycles thermodynamiques n'ont pas lieu dans la seconde chambre de combustion (22),
dans lequel, pour une commutation du premier état de fonctionnement au second état de fonctionnement, on passe d'une utilisation d'une première courbe de levée de soupape à l'utilisation d'une seconde courbe de levée de soupape pour l'actionnement de la soupape d'admission (28) associée à la première chambre de combustion et dans lequel au moins la soupape d'admission (28) associée à la première chambre de combustion (22) est fermée, lors d'un actionnement selon la première courbe de levée de soupape, avant ou après le PMB et, selon la seconde courbe de levée de soupape, plus près du PMB, **caractérisé en ce que,** après la commutation du premier état de fonctionnement au second état de fonctionnement, le calage de distribution pour la soupape d'admission (28) associée à la première chambre de combustion (22) est décalé, au moyen d'un variateur de phase (54)
- dans la direction retard, quand, pour le premier état de fonctionnement, une fermeture de l'admission avant le PMB était prévue ou
- dans la direction avance, quand, pour le premier état de fonctionnement, une fermeture de l'admission après le PMB était prévue.

2. Procédé selon la revendication 1, **caractérisé en ce que** la première courbe de levée de soupape est appliquée à la soupape d'admission (28) au moyen d'une première came d'admission (60) et la seconde courbe de levée de soupape au moyen d'une seconde came d'admission (62).

3. Procédé selon la revendication 1 ou 2, **caractérisé en ce qu'au** moins la soupape d'admission (28) associée à la première chambre de combustion (22) est fermée, lors d'un actionnement selon la première courbe de levée de soupape, avant le PMB -60° de rotation du vilebrequin ou après le PMB +100° de rotation du vilebrequin et/ou, lors d'un actionnement selon la seconde courbe de levée de soupape, dans la plage comprise entre le PMB ±45° de rotation du vilebrequin.

4. Procédé selon l'une quelconque des revendications précédentes, **caractérisé en ce que** la largeur de la seconde courbe de levée de soupape est, par rapport à la largeur de la première courbe de levée de soupape
- supérieure, quand, pour le premier état de fonctionnement, une fermeture de l'admission avant le PMB était prévue ou
- inférieure, quand, pour le premier état de fonctionnement, une fermeture de l'admission après le PMB était prévue.

5. Procédé selon l'une quelconque des revendications précédentes, **caractérisé en ce qu'au** moins la soupape d'admission (28) associée à la première chambre de combustion (22)
- est décalée davantage dans la direction retard jusqu'à au moins le PMB +25° de rotation du vilebrequin, quand, pour le premier état de fonctionnement, une fermeture de l'admission avant le PMB était prévue ou
- est décalée dans la direction avance jusqu'à au moins le PMB -20° de rotation du vilebrequin, quand, pour le premier état de fonctionnement, une fermeture de l'admission après le PMB était prévue.

6. Procédé selon l'une quelconque des revendications précédentes, **caractérisé en ce que,** pour une commutation du premier état de fonctionnement au second état de fonctionnement, un chevauchement des soupapes d'admission et/ou d'échappement associées à la première chambre de combustion (22) est adapté.

7. Procédé selon la revendication 6, **caractérisé en ce que,** pour l'actionnement de la soupape d'échappement (30) associée à la première chambre de combustion (22), on passe d'une utilisation d'une première came d'échappement (60) à l'utilisation d'une seconde came d'échappement (62).

8. Procédé selon la revendication 7, **caractérisé en ce que** la seconde came d'échappement (62) provoque, en comparaison avec la première came d'échappement (60)
- une fermeture d'échappement relativement tardive quand, pour le premier état de fonctionnement, une fermeture de l'admission avant le PMB était prévue ou
- une fermeture d'échappement relativement précoce quand, pour le premier état de fonctionnement, une fermeture de l'admission après le PMB était prévue.

9. Procédé selon l'une quelconque des revendications précédentes, **caractérisé en ce que,** après la commutation du premier état de fonctionnement au second état de fonctionnement, la pression dans une tubulure d'admission (18) du moteur à combustion interne est augmentée.

10. Procédé selon l'une quelconque des revendications précédentes, **caractérisé en ce que,** pour la commutation du premier état de fonctionnement au second état de fonctionnement, un angle d'allumage précédemment réglé relativement tardif pour la première chambre de combustion (22) est décalé dans la direction avance.

11. Procédé selon la revendication 10, **caractérisé en ce que**, après le décalage côté avance, l'angle d'allumage est de nouveau décalé dans la direction retard.

12. Moteur à combustion interne comprenant un moteur à combustion (10), qui forme au moins deux chambres de combustion (22), qui sont délimitées par des cylindres (16) formés dans un logement de cylindres (12) et des pistons (24) guidés dans ceux-ci et dans lesquels, lorsque le moteur à combustion interne est en fonctionnement, des cycles thermodynamiques peuvent avoir lieu, un échange gazeux dans les chambres de combustion (22) pouvant être commandé au moyen respectivement d'une soupape d'admission (28) et d'une soupape d'échappement (30) et dans lequel, pour la soupape d'admission (28) associée à une première chambre de combustion (22), aussi bien deux courbes de levée de soupape, une commutation entre l'utilisation desquelles étant possible au moyen d'un dispositif de commutation (58), qu'un variateur de phase (54) sont prévus, **caractérisé par** un dispositif de commande (52), qui est programmé de manière à pouvoir exécuter un procédé selon l'une quelconque des revendications précédentes.

13. Moteur à combustion interne selon la revendication 12, **caractérisé par**
- deux cames d'échappement (60, 62) pour la soupape d'échappement (30) et/ou soupape d'admission (28) associées à la première chambre de combustion (22) et/ou à la seconde chambre de combustion (22), une commutation entre l'utilisation de celles-ci étant possible au moyen d'un dispositif de commutation (58) et/ou
- des moyens destinés à influencer la pression dans une tubulure d'admission (18) du moteur à combustion interne et/ou
- un variateur de phase (54) pour modifier le calage de distribution également pour la soupape d'admission (28) associée à la seconde chambre de combustion (22) et/ou pour modifier le calage de distribution pour la soupape d'échappement (30) associée à la première chambre de combustion (22) et/ou à la seconde chambre de combustion (22).
